# EUROPÄISCHE PATENTSCHRIFT

(11) **EP 1 548 335 B1**
(45) Veröffentlichungstag und Bekanntmachung des Hinweises auf die Patenterteilung: **21.06.2006**
(21) Anmeldenummer: 04027049.8
(22) Anmeldetag: 13.11.2004
(51) Int. Cl.: F16H 63/32

(54) **Schaltgabel**
Shift fork
Fourchette de changement

(30) Priorität: 24.12.2003 DE 10360715
(43) Veröffentlichungstag der Anmeldung: 29.06.2005
(73) Patentinhaber: Schaeffler KG, 91074 Herzogenaurach (DE)
(72) Erfinder: Grieshammer, Andreas, 90429 Nürnberg (DE); Pogrebnyak, Dmytro, 90409 Nürnberg (DE)

(56) Entgegenhaltungen:
- EP-A- 1 347 216
- DE-A1- 10 045 506
- DE-A1- 10 125 098
- DE-A1- 10 207 833
- PATENT ABSTRACTS OF JAPAN Bd. 007, Nr. 010 (P-168), 14. Januar 1983 (1983-01-14) -& JP 57 166621 A (NISSAN JIDOSHA KK), 14. Oktober 1982 (1982-10-14)

## Beschreibung

### Gebiet der Erfindung

Die Erfindung betrifft eine Schaltgabel für ein Wechselgetriebe, mit einem Grundkörper, der im Wesentlichen gabelförmig ausgebildet ist und eine Schiebemuffe zumindest teilweise umgreift, wobei der Grundkörper in einem Schnitt senkrecht zur Gabelebene ein im Wesentlichen U-förmig ausgebildetes Profil aufweist.

In manuellen oder automatisierten Getrieben ist zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Ganges wird die Schiebemuffe in axialer Richtung auf eines der Gangräder zu verschoben, bis die Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Die Schaltgabel hat die Aufgabe die axiale Bewegung von einem Schaltgestänge auf die Schiebemuffe zu übertragen. Dabei ist die Schaltgabel axial verschiebbar auf einer Schaltwelle bzw. Schaltstange gelagert und greift mit Mitnehmern in eine Führungsnut der Schiebemuffe ein.

Eine derartige Schaltgabel ist aus der DE 101 25 098 bekannt. Diese Schaltgabel besteht aus einem durch ein Umformverfahren aus Stahlblech hergestellten gabelförmigen Grundkörper. Der Grundkörper ist bogenförmig ausgebildet und läuft in zwei Mitnehmern aus. Die Mitnehmer schließen ein Schaltmaul der Schaltgabel zwischen sich ein. Der Grundkörper ist aus einem im Längsschnitt U-förmigen Profil ausgebildet. An der Schaltgabel ist zur Versteifung der räumlichen Struktur ein separat gefertigtes Formteil aus Blech angebracht, wobei die Verbindung durch Schweißen hergestellt wird. An das Formteil schließt sich ein Führungsauge an, mit welchem die Schaltgabel an einer Schaltwelle axial verschiebbar gelagert ist. Weiterhin ist am Formteil bzw. an dem Führungsauge ein Schaltarm durch eine Schweißverbindung angebracht.
Die Steifigkeit des aus Dünnblech gefertigten, profilierten Grundkörpers wird mittels des angeschweißten Formteils erhöht. Allerdings sind weitere Steifigkeitserhöhende Maßnahmen wünschenswert.

### Zusammenfassung der Erfindung

Der Erfindung liegt daher die Aufgabe zugrunde diese geschilderten Nachteile zu vermeiden und somit eine kostengünstig zu produzierende Schaltgabel in Leichtbauweise zu schaffen, die eine hohe Steifigkeit aufweist.

Erfindungsgemäß wird diese Aufgabe dadurch gelöst, dass zumindest an einem offenen Rand des im Schnitt senkrecht zur Gabelebene U-förmigen Profils des Grundkörpers ein sich im Wesentlichen in Richtung des Verschiebewegs der Schaltgabel erstreckendes Knotenblech angeordnet ist. Vorteilhafterweise ist vorgesehen, dass an beiden Rändern des im Schnitt senkrecht zur Gabelebene U-förmigen Profils des Grundkörpers je ein sich im Wesentlichen in Richtung des Verschiebewegs der Schaltgabel erstreckendes Knotenblech angeordnet ist. Weiterhin soll das Knotenblech einteilig mit dem Grundkörper ausgebildet und der Grundkörper in einem spanlosen Umformverfahren aus einem Blechteil, vorzugsweise aus einem Stahlblechteil, gefertigt sein. Dabei sind umformtechnische Verfahren wie beispielsweise Biegen, Pressen und Ziehen einsetzbar. Das Knotenblech kann gleichzeitig mit dem Ausformen des Profilkörpers der Schaltgabel einteilig mit dieser gefertigt werden, wodurch der Herstellungsaufwand gering bleibt. Der Einsatz von umformtechnischen Methoden und von Stahlblech als Ausgangsmaterial führt neben einem Gewichtsvorteil gegenüber massiven Schaltgabeln und hoher Steifigkeit der Schaltgabel zu einer erheblichen Kostenreduktion in der Massenproduktion. Das Knotenblech führt zu einer deutlichen Versteifung der Schaltgabel und erhöht dessen Fähigkeit Torsions- und Widerstandsmomente aufzunehmen. Dies wird durch das Anbringen je eines Knotenbleches an beiden Rändern des Profilkörpers noch weiter verbessert. Ein weiterer Vorteil ergibt sich für eine Schaltgabel gemäß Erfindung daraus, dass über die Gestalt des Knotenbleches die Steifigkeiten bzw. Elastizitäten einfach und kostengünstig gezielt beeinflussbar sind.

In einer vorteilhaften Weiterbildung der Erfindung ist vorgesehen, dass im Bereich des Knotenbleches am Grundkörpers eine Aufnahme angebracht ist, an der ein Führungsteil befestigt ist. Das Führungsteil ist eine Schaltschiene oder eine Führungshülse, wobei die Schaltschiene bzw. die Führungshülse mittels Kleb- oder Schweißverbindungen am Grundkörper angebracht sind.
Die Führungshülse ist starr mit der Schaltgabel verbunden und umfasst eine Schaltstange bzw. eine Schaltwelle, auf der die Führungshülse axial verschiebbar gelagert ist.
Durch die Ausbildung einer Aufnahme im Bereich des Knotenblechs des Grundkörpers ist es möglich die Auflagefläche des Führungsteils und damit die Verbindungsfläche zu vergrößern. Im Falle der Führungshülse wird der Abstand zwischen den stirnseitig an der Führungshülse ausgeführten Schweißverbindungen erhöht. Diese Maßnahmen erhöhen die Festigkeit der Verbindung zwischen Grundkörper und Führungsteil.

In einer vorteilhaften Fortbildung der Erfindung ist in die Führungshülse mindestens eine Gleitlagerhülse eingebracht. Die Lagerung der Führungshülse auf der Schaltstange mittels eines Gleitlagers reduziert die Reibung bei axialen Bewegungen und erhöht damit den Schaltkomfort. Neben einer Gleitlagerhülse sind natürlich auch Linearwälzlager oder Radial-Linearwälzlager denkbar

### Kurze Beschreibung der Zeichnungen

Weitere Merkmale der Erfindung ergeben sich aus der nachfolgenden Beschreibung und aus den Zeichnungen, in der ein Ausführungsbeispiel der Erfindung vereinfacht dargestellt ist. Es zeigen:
- Figur 1: einen Längsschnitt einer Schiebemuffe mit Führungsnut, in die eine Schaltgabel eingreift,
- Figur 2: eine perspektivische Ansicht einer erfindungsgemäßen Schaltgabel mit einteilig ausgeführter Führungshülse und Schaltarm,

### Ausführliche Beschreibung der Zeichnungen

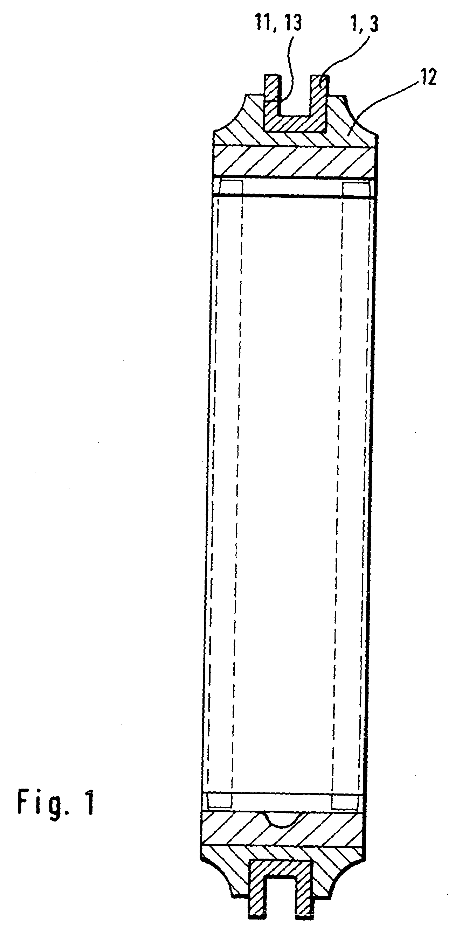

Figur 1 zeigt einen Längsschnitt durch eine Schiebemuffe 12. Die Schiebemuffe 12 ist mit einer Führungsnut 11 versehen, in die Mitnehmer 3 einer Schaltgabel 1 eingreifen. Die Mitnehmer 3 stehen in ständigem Reibkontakt mit einer Wandung 13 der Führungsnut 11.

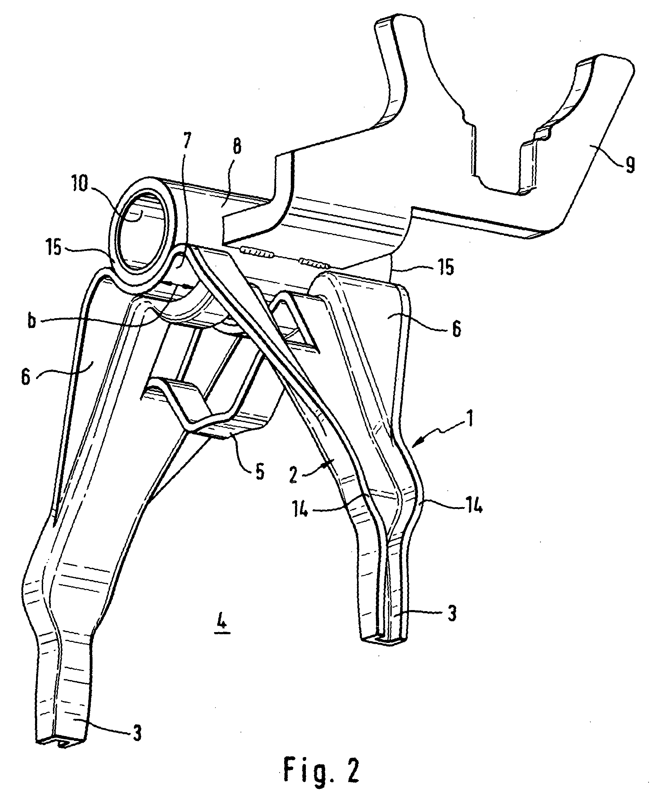

In Figur 2 ist eine erfindungsgemäße Schaltgabel 1 in einer perspektivischen Ansicht dargestellt. Diese besteht aus einem Grundkörper 2, der in zwei mit diesem einteilig ausgeführte Mitnehmer 3 übergeht. Die Mitnehmer 3 und der Grundkörper 2 bilden ein Schaltmaul 4, welches im montierten Zustand der Schaltgabel 1 eine Schiebemuffe 12 zumindest teilweise umgreift. Die Mitnehmer 3 sind derart ausgeführt, dass sie in eine Führungsnut 11 einer Schiebemuffe 12 einer Schaltkupplung eingreifen können.

In der dargestellten Ausführungsform ist die Schaltgabel 1 am Grundkörper 2 mit einer Stützlasche 5 versehen, die in das Schaltmaul 4 hineinragt. Die Stützlasche 5 kann einteilig mit dem Grundkörper 2 oder als separates Teil ausgeführt sein, welches nachträglich am Grundkörper 2 angebracht wird. Die Stützlasche 5 greift ebenfalls in die Führungsnut 11 einer Schiebemuffe 12 ein, wodurch die Schiebemuffe 12 bei axialer Verschiebung der Schaltgabel 1 nun an drei Stellen mit einer Kraft beaufschlagt wird, was sich positiv auf die auf die Schaltgabel 1 wirkenden Torsions- und Widerstandsmomente auswirkt.

Sowohl die Stützlasche 5 als auch die Mitnehmer 3 sind in den Bereichen, in denen sie in die Führungsnut 11 der Schiebemuffe 12 eingreifen, und in Reibkontakt mit der Wandung 13 stehen, mit einer reibungsmindernden Beschichtung versehen. Dabei ist vorgesehen, dass die Beschichtung aus Materialien besteht, die im Zusammenwirken mit dem Material der Wandung 13 der Führungsnut 11 einen geringen Reibungskoeffizienten aufweisen. Dafür sind beispielsweise geeignete Metallschichten, Metallegierungen oder Kunststoffschichten auszuwählen. Im Fall einer separat ausgeführten Stützlasche 5 kann diese vorteilhafterweise auch komplett aus diesen Materialien bestehen.

Sowohl die Mitnehmer 3 als auch der Grundkörper 2 sind als Profilkörper ausgeführt, wobei die Profile im Schnitt senkrecht zur Gabelebene U-förmig ausgebildet sind. Zusätzlich ist an den Rändern 14 des im Schnitt senkrecht zur Gabelebene U-förmigen Profils des Grundkörpers 2 je ein sich axial vom Grundkörper 2 weg erstreckendes Knotenblech 6 ausgebildet. Die Knotenbleche 6 sind einteilig mit dem Grundkörper 2 ausgeführt. Diese Erweiterung des Profils im Bereich des Grundkörpers 2 führt zu einer deutlich höheren Widerstandsfähigkeit der Schaltgabel 1 gegenüber Torsions- und Widerstandsmomenten. In der dargestellten Ausführungsform sind die Knotenbleche 6 im mittleren Bereich des Grundkörpers 2 angebracht. Diese erstrecken sich, ausgehend von der Mitte des Grundkörpers 2, entlang des Grundkörpers in beide Richtungen auf die Mitnehmer 3 zu. Die größte Breite b der Knotenbleche 6 senkrecht zu der Ebene, die durch das Schaltmaul 4 definiert wird, liegt im mittleren Bereich des Grundkörpers 2. Mit zunehmendem Abstand von diesem Bereich entlang des Grundkörpers 2 nimmt die Breite der Knotenbleche 6 kontinuierlich ab.

In dem Bereich der maximalen Breite b der Knotenbleche 6 sind der Grundkörper 2 und die Knotenbleche 6 mit einer Aufnahme 7 versehen. Die Aufnahme 7 nimmt eine einteilig ausgeführte zylindrische Führungshülse 8 auf. Die axiale Länge der Führungshülse 8 ist der Gesamtbreite der Aufnahme 7 angepaßt und derart angeordnet, dass die Stirnseiten 15 bündig mit den Knotenblechen 6 abschließen. Mit Hilfe von Laserschweißverbindungen sind die Strinseiten 15 der Führungshülse 8 mit den Knotenblechen 6 verbunden. Der größere Abstand der Schweißverbindungen, im Vergleich zur Ausführungsform aus dem Stand der Technik, führt dazu, dass die Festigkeit der Verbindung deutlich erhöht wird.

In die separat gefertigte Führungshülse 8 ist zumindest eine Gleitlagerhülse 10 eingebracht. Die Führungshülse 8 und die Gleitlagerhülse 10 umgreifen eine nicht dargestellte Schaltstange bzw. Schaltwelle. Der Einsatz der Gleitlagerhülse 10 verringert die Reibung zwischen Führungshülse 8 und der Schaltwelle bei Relativbewegungen und erhöht damit den Schaltkomfort. Weiterhin ist an der Führungshülse 8 mittels einer Schweißverbindung ein Schaltarm 9 befestigt. In den Schaltarm 9 greift ein nicht dargestellter Schaltfinger ein, der axiale Bewegungen eines ebenfalls nicht dargestellten Schaltgestänges auf den Grundkörper 2 überträgt.

Der Grundkörper 2, inklusive der zwei Knotenbleche 6, ist in einem spanlosen Umformverfahren aus einem Blechteil, vorzugsweise einem Stahlblechteil, gefertigt. Mit Hilfe moderner Umformverfahren ist es möglich den Grundkörper 2 mit den einteilig mit diesem ausgeführten Knotenblechen 6 in einem Verfahren herzustellen. Zum einen sind die Produktionskosten und das Gewicht der erfindungsgemäßen Schaltgabel 1 deutlich günstiger als die im Stand der Technik beschriebenen Schaltgabel. Außerdem wird durch die Knotenbleche 6 eine erhebliche Steigerung der Steifigkeit der erfindungsgemäßen Schaltgabel 1 erreicht, wodurch diese auch in modernen Getrieben mit hohen Schaltkräften eingesetzt werden kann.

### Bezugszahlenliste

- 1: Schaltgabel
- 2: Grundkörper
- 3: Mitnehmer
- 4: Schaltmaul
- 5: Stützlasche
- 6: Knotenblech
- 7: Aufnahme
- 8: Führungshülse
- 9: Schaltarm
- 10: Gleitlagerhülse
- 11: Führungsnut
- 12: Schiebemuffe
- 13: Wandung
- 14: Rand
- 15: Strinseite
- b: Breite

## Patentansprüche

1. Schaltgabel (1) für ein Wechselgetriebe, mit einem Grundkörper (2), der im Wesentlichen gabelförmig ausgebildet ist und eine Schiebemuffe zumindest teilweise umgreift, wobei der Grundkörper (2) in einem Schnitt senkrecht zur Gabelebene ein im Wesentlichen U-förmig ausgebildetes Profil aufweist, **dadurch gekennzeichnet, dass** zumindest an einem Rand des im Schnitt senkrecht zur Gabelebene U-förmigen Profils des Grundkörpers (2) ein sich im Wesentlichen in Richtung des Verschiebewegs der Schaltgabel (1) erstreckendes Knotenblech (6) angeordnet ist.

2. Schaltgabel (1) nach Anspruch 1, **dadurch gekennzeichnet, dass** an beiden Rändern des im Schnitt senkrecht zur Gabelebene U-förmigen Profils des Grundkörpers (2) je ein sich im Wesentlichen in Richtung des Verschiebewegs der Schaltgabel (1) erstreckendes Knotenblech (6) angeordnet ist.

3. Schaltgabel (1) nach Anspruch 1, **dadurch gekennzeichnet, dass** das Knotenblech (6) einteilig mit dem Grundkörper ausgebildet ist

4. Schaltgabel (1) nach Anspruch 1, **dadurch gekennzeichnet, dass** der Grundkörper (2) in einem spanlosen Umformverfahren aus einem Blechteil gefertigt ist.

5. Schaltgabel (1) nach einem der Ansprüche 1-4, **dadurch gekennzeichnet, dass** im Bereich des Knotenbleches (6) am Grundkörpers (2) eine Aufnahme (7) angebracht ist, an der ein Führungsteil befestigt ist

6. Schaltgabel (1) nach Anspruch 5, **dadurch gekennzeichnet, dass** das Führungsteil eine Schaltschiene ist.

7. Schaltgabel (1) nach Anspruch 6, **dadurch gekennzeichnet, dass** die Schaltschiene mit dem Grundkörper (2) verschweißt ist.

8. Schaltgabel (1) nach Anspruch 5, **dadurch gekennzeichnet, dass** das Führungsteil eine Führungshülse ist.

9. Schaltgabel (1) nach Anspruch 8, **dadurch gekennzeichnet, dass** die Führungshülse (8) mit dem Grundkörper (2) verschweißt ist.

10. Schaltgabel (1) nach Anspruch 8, **dadurch gekennzeichnet, dass** in die Führungshülse (8) mindestens eine Gleitlagerhülse (10) eingebracht ist.

## Claims

1. Gearshift fork (1) for a manual transmission comprising a base body (2) that has a substantially fork-shaped configuration and engages at least partially around a sliding sleeve, the base body (2) having a substantially U-shaped profile in a section perpendicular to the plane of the fork, **characterised in that** a gusset plate (6) extending substantially in the direction of displacement of the gearshift fork (1) is arranged at least on one edge of the profile of the base body (2) that is substantially U-shaped in a section perpendicular to the plane of the fork.

2. Gearshift fork (1) according to claim 1, **characterised in that** a gusset plate (6) extending substantially in the direction of displacement of the gearshift fork (1) is arranged on both edges of the profile of the base body (2) that is substantially U-shaped in a section perpendicular to the plane of the fork.

3. Gearshift fork (1) according to claim 1, **characterised in that** the gusset plate (6) is made in one piece with the base body.

4. Gearshift fork (1) according to claim 1, **characterised in that** the base body (2) is made by a shaping method without chip removal out of a sheet metal part.

5. Gearshift fork (1) according to one of the claims 1 - 4, **characterised in that** a reception (7) is arranged in the region of the gusset plate (6) on the base body (2), and a guide element is fixed on the reception (7).

6. Gearshift fork (1) according to claim 5, **characterised in that** the guide element is a selector shaft.

7. Gearshift fork (1) according to claim 6, **characterised in that** the selector shaft is welded to the base body (2).

8. Gearshift fork (1) according to claim 5, **characterised in that** the guide element is a guide sleeve.

9. Gearshift fork (1) according to claim 8, **characterised in that** the guide sleeve (8) is welded to the base body (2).

10. Gearshift fork (1) according to claim 8, **characterised in that** at least one sliding bearing bushing (10) is inserted into the guide sleeve (8).

## Revendications

1. Fourchette de changement de vitesse (1) pour une boîte de changement de vitesse ayant un corps de base (2) qui a une configuration globalement en en forme de fourchette et s'engage au moins partiellement autour d'un manchon coulissant, ledit corps de base (2) ayant en coupe verticale au plan de la fourchette, un profil globalement en forme de U, **caractérisée en ce que**, une plaque gousset (6) qui s'étend sensiblement dans la direction de déplacement de la fourchette de changement de vitesse (1) est agencée au moins sur un bord du profil du corps de base (2) ayant en coupe verticale au plan de la fourchette, globalement la forme de U.

2. Fourchette de changement de vitesse (1) selon la revendication 1, **caractérisée en ce que**, une plaque gousset (6) qui s'étend sensiblement dans la direction de déplacement de la fourchette de changement de vitesse (1) est agencée sur chacun des deux bords du profil du corps de base (2) ayant en coupe verticale au plan de la fourchette, globalement la forme de U.

3. Fourchette de changement de vitesse (1) selon la revendication 1, **caractérisée en ce que** la plaque gousset (6) est configurée d'un seul tenant avec le corps de base.

4. Fourchette de changement de vitesse (1) selon la revendication 1, **caractérisée en ce que** le corps de base (2) est fabriqué par un procédé de formage sans enlèvement de copeaux dans un feuillard en tôle.

5. Fourchette de changement de vitesse (1) selon l'une des revendications 1 - 4, **caractérisée en ce que**, dans la région de la plaque gousset (6) est agencée sur le corps de base (2), une réception (7) sur laquelle est fixé un élément de guidage.

6. Fourchette de changement de vitesse (1) selon la revendication 5, **caractérisée en ce que** l'élément de guidage est une réglette de sélection.

7. Fourchette de changement de vitesse (1) selon la revendication 6, **caractérisée en ce que** la réglette de sélection est soudée au corps de base (2).

8. Fourchette de changement de vitesse (1) selon la revendication 5, **caractérisé en ce que** l'élément de guidage est une douille de guidage.

9. Fourchette de changement de vitesse (1) selon la revendication 8, **caractérisée en ce que** la douille de guidage (8) est soudée au corps de base (2).

10. Fourchette de changement de vitesse (1) selon la revendication 8, **caractérisée en ce que**, au moins une douille (10) de palier glissant est insérée dans la douille de guidage (8).
